# EUROPÄISCHE PATENTSCHRIFT

(11) **EP 1 927 521 B1**
(45) Veröffentlichungstag und Bekanntmachung des Hinweises auf die Patenterteilung: **05.11.2014**
(21) Anmeldenummer: 07023093.3
(22) Anmeldetag: 28.11.2007
(51) Int. Cl.: C02F 3/06, B60S 3/04, C02F 103/44, C02F 1/74

(54) **Vorrichtung und Verfahren zur Verminderung von Geruchsbelästigung bei Fahrzeugwaschanlagen**
Device and method for reducing unpleasant smells in vehicle washing installations
Dispositif et procédé de réduction des nuisances olfactives dans les installations de lavage de véhicules

(30) Priorität: 28.11.2006 DE 102006056129
(43) Veröffentlichungstag der Anmeldung: 04.06.2008
(73) Patentinhaber: Kaw Kiehl KG, 85235 Odelzhausen (DE)
(72) Erfinder: Lenz, Michael, 66123 Saarbrücken (DE); Nett, Peter, 86391 Stadtbergen (DE)
(74) Vertreter: Klunker . Schmitt-Nilson . Hirsch

(56) Entgegenhaltungen:
- EP-A1- 0 694 504
- DE-U1- 9 310 027
- DE-U1-202005 013 382

## Beschreibung

Die vorliegende Erfindung betrifft Fahrzeugwaschanlagen gemäss Anspruch 1, aufweisend einen Waschwasser-Wiederaufbereitungs-Kreislauf mit in Strömungsrichtung einem Sammelbecken, einer Filtereinrichtung und einem Vorlagebehälter, in dem wiederaufbereitetes Waschwasser zur Fahrzeugwäsche bereitgehalten wird.

Derartige Fahrzeugwaschanlagen sind beispielsweise als Waschstraßen, Portalwaschanlagen, Nutzfahrzeugwaschanlagen vielfältig im Einsatz. Von dem Waschwasser-Wiederaufbereitungs-Kreislauf wird das Waschwasser nach der Fahrzeugwäsche gesammelt, aufbereitet und erneut für den Waschvorgang bereitgestellt. Bei Betrieb wird das Waschwasser nach dem Waschen aufgesammelt und fließt von dort in ein oder mehrere unterirdisch angeordnete Sammelbecken, von wo aus es über eine Filtereinrichtung in ein Vorlagebehälter abgezogen wird, aus dem das für das Waschen erforderliche Wasser entnommen wird. Generell ähnlich ist der Waschwasser-Wiederaufbereitungs-Kreislauf bei einer Waschstraße, wobei bei einer Waschstraße typischerweise zwei Schlammfangbecken vor dem Stapelbecken angeordnet sind.

In einem solchen Waschwasser-Wiederaufbereitungs-Kreislauf befindet sich der größte Teil des Wassers in den Sammelbecken. Von dort aus wird das Wasser durch eine Tauchpumpe abgesaugt und über die Filtereinrichtung gefiltert, um zu vermeiden, dass Feststoffe im Wasser in die Hochdruckpumpen; Magnetventile; Düsen, etc., gelangen können und dort Beschädigungen verursachen können. Im Vorlagebehälter wird typischerweise eine Wassermenge vorgehalten, die zur Reinigung von ein bis drei Fahrzeugen ausreichend ist. Fällt der Wasserstand im Vorlagebehälter ab, wird typischerweise mittels der Saugpumpe Wasser aus einem der Sammelbecken durch die Filtereinrichtung und in den Vorlagebehälter gepresst. Filter und Vorlagebehälter, die typischerweise relativ klein sind, sind regelmäßig im Technikraum der Fahrzeugwaschanlage angeordnet.

In einer Portalwaschanlage befinden sich zwischen 6 und 15 m³ Waschwasser, wobei in vielen Anlagen 10 m³ Waschwasser enthalten sind. Dabei haben das Schlammfangbecken und das Stapelbecken jeweils etwa 5 m³Fassungsvermögen. In dem Vorlagebehälter bzw. In der Vorlage befinden sich ca. 200l Wasser und der Filter hat ein Volumen von etwa 50 bis 150l, wobei bei Kiesbett- oder Sandbettfiltern typischerweise etwa 75% davon mit Filtermaterial gefüllt sind, so dass sich von den 10 m³ Waschwasser im System deutlich weniger als 50l Wasser im Filter befinden. Weitere ca. 200l Wasser befinden sich in der Vorlage. Entsprechend befinden sich in einer Waschstraße ca. 20 bis 40 m³ Waschwasser und in den meisten Anlagen ca. 30 m³ Wasser. Die beiden Schlammfangbecken sowie das Stapelbecken haben jeweils etwa 10 m³ Fassungsvermögen, dem ein Fassungsvermögen von lediglich etwa 1 m³ im Vorlagebehälter und ca. 1 bis 2 m³ in der Filtereinrichtung entgegen stehen.

Insbesondere in den Sommermonaten bzw. bei höheren Temperaturen kommt es infolge des Schmutzeintrags und durch den biologischen Abbau der Schmutzstoffe und der Waschchemikalien in dem Waschwasser-Wiederaufbereitungs-Kreislauf bei der Fahrzeugwaschanlage zu erheblichen Geruchsbelästigungen. Ursache dafür sind vor allem anaerobe Abbauprozesse der Biomasse in dem Waschwasser-Wiederaufbereitsungs-Kreislauf, wobei Faulgase, z.B. Methan und Schwefelwasserstoff entstehen.

Es ist bekannt, dass für den aeroben biologischen Abbau der Biomasse in dem Waschwasser Sauerstoff benötigt wird. Kaltes Wasser kann mehr Sauerstoff aufnehmen, was eine der Gründe dafür ist, dass Geruchsbelästigung in unseren Breiten, insbesondere in den Sommermonaten auftritt. Um in dem Waschwasser-Wiederaufbereitungs-Kreislauf einen aeroben biologischen Abbau mit der entsprechenden geringeren Geruchsbelästigung zur Verfügung zu stellen, werden bereits unterschiedlichste Maßnahmen ergriffen. So existieren aktuell hauptsächlich drei Ansätze zum Eintrag von Sauerstoff in das Waschwasser. Zum einen wird dem Wasser mittels Gebläse über eine Vielzahl von tellerförmigen Membranen in den Sammelbecken und den Vorlagebehältern Luft mit einem relativ hohen Volumenstrom und geringem Überdruck zugeführt. Bei einem anderen Verfahren wird über einen Injektorbelüfter nach dem Venturi-Prinzip dem Wasserstrom Luft zugeführt. Bei einem dritten Lösungsansatz wird über ein Bypass-Ventil, welches meistens an dem Vorlagebehälter im Technikraum angebracht ist, ständig eine geringe Menge an Wasser direkt, d.h. ohne zur Fahrzeugwäsche verwendet zu werden, über den Waschwasserabfluß der Waschanlage dem Sammelbecken zugeleitet. So soll sichergestellt werden, dass in dem Vorlagebehälter frisch wieder aufbereitetes Waschwasser zur Verfügung steht. Bei diesem Lösungsansatz können zum einen die relativ großen Oberflächen in dem Sammelbecken zum Sauerstoffaustausch eingesetzt werden. Zusätzlich ist es möglich, eine Belüftung in dem Sammelbecken und/oder dem Vorlagebehälter vorzusehen.

Eine besondere Problematik in diesem Zusammenhang ist, dass eine Belüftung des Faulschlamms in dem Sammelbecken nicht möglich ist, da das zu einem Aufwirbeln des Faulschlamms und zu einem Verlegen der Filtereinrichtung innerhalb kürzester Zeit führen würde. Stattdessen belüftet man das Waschwasser in dem Sammelbecken beispielsweise mit einem Abstand von dem Faulschlamm, etwa 80 cm unterhalb der Oberfläche, so dass systembedingt in dem Sammelbecken teilweise trotz der Luftzufuhr ein anaerober Abbau erfolgt.

Trotz dieser genannten Verfahren lässt sich aber ein anaerober Abbau und damit eine Geruchsbelästigung nicht vermeiden. In der Praxis geht das soweit, dass Fahrzeugwaschanlagen in den Sommermonaten beispielsweise nach einer Standphase bzw. einem Wochenende derart stinken, dass man sie danach erst über einen gewissen Zeitraum laufen lassen muss, um sich danach in ihrer Nähe aufhalten zu können und mit dem eigentlichen Waschbetrieb beginnen zu können.

Häufig müssen trotzdem Desinfektionsmittel eingesetzt werden, um die Geruchsbelästigung in den Griff zu bekommen. Typischerweise wird dabei Wasserstoffperoxyd in die Sammelbecken gegeben. Der Einsatz von Chemie tötet sämtliche Mikroorganismen in dem Waschwasser-Wiederaufbereitungs-Kreislauf ab, also auch die eigentlich erwünschten, den aeroben Abbau leistenden Mikroorganismen.

Aus der DE 93 10 027 ist eine Vorrichtung zum Reinigen von Abwässern, insbesondere Abwässern von Autowaschanlagen bekannt, die aus einem ersten Behälter, dem das Abwasser zugeführt wird, einem Schlammfilter, dem mittels einer Pumpe das Abwasser vom ersten Behälter zugeführt wird, einem Bioreaktor, dem das mechanisch gefilterte Wasser zugeführt wird, und einem Pumpspeicher, dem das Brauchwasser vom Bioreaktor zugeführt wird, besteht. Der Schlammfilter ist über eine ein Rückschlagventil aufweisende Leitung mit dem Bioreaktor verbunden. Zwischen dem Pumpspeicher und dem Bioreaktor ist eine in Richtung des Bioreaktors fördernde Pumpe angeordnet, die Brauchwasser zu einer Seite des Filterfestbetts des Bioreaktors fördert, und an der anderen Seite des Filterfestbetts ist ein Rückspülablass am Bioreaktor vorgesehen.

EP 0 694 504 A1 offenbart eine Vorrichtung zum Reinigen von Abwässern, insbesondere von Autowaschanlagen, mit einem Bioreaktor, der ein Filterfestbett mit Biomasse umfasst und der einen Zulauf für zu reinigendes Wasser umfasst, sowie einen Ablauf für gereinigtes Wasser, wobei der Zulauf einer mechanischen Filtereinrichtung nachgeschaltet ist, und wobei der Ablauf unterhalb des Wasserspiegels des Bioreaktors angeordnet ist, wobei der Zulauf vor einer Prallwand mündet, und wobei ein zweiter Ablauf in Höhe der Wasserlinie im Bioreaktor angeordnet ist.

Aus der DE 20 2005 013382 U1 ist ein Aufbereitungssystem für Brauchwasser, insbesondere für Autowaschanlagen mit mindestens einem Bürstensystem und mit mindestens einer Waschzone, mit einem Schlammfang, einem Belebungsbecken und einer Tiefenfiltrationsstufe bekannt. Dabei enthält eine Brauchwasservorlage einen einen zusätzlichen O₂-Eintrag ermöglichenden Umwälzkreis.

Entsprechend ist es die Aufgabe der vorliegenden Erfindung, bei einer Fahrzeugwaschanlage einen anaeroben Abbau und damit eine Geruchsbelästigung insbesondere nach längeren Standzeiten zu vermeiden.

Erfindungsgemäß wird diese Aufgabe mit einer Fahrzeugwaschanlage gemäss Anspruch 1 gelöst, die einen Waschwasser-Wiederaufbereitungs-Kreislauf mit in Strömungsrichtung einen Sammelbecken, einer Pumpe, eine Filtereinrichtung und einem Vorlagebehälter aufweist, in dem wiederaufbereitetes Waschwasser zur Fahrzeugwäsche bereitgehalten wird. Die Filtereinrichtung wird dabei während Pumpphasen von oben nach unten von dem Waschwasser durchströmt. An die Filtereinrichtung ist eine Belüftungseinrichtung zum Einbringen von Luft in die Filtereinrichtung angeschlossen, die so ausgebildet ist, dass sie während Pumppausen Luft von unten in die Filtereinrichtung einbläst, so dass sich in dem in der Filtereinrichtung stehenden Waschwasser eine erhöhte Sauerstoffkonzentration einstellt.

Es hat sich überraschenderweise herausgestellt, dass durch das Einbringen von Luft in den vermeintlich kleinen Anteil an Waschwasser, der sich in der Filtereinrichtung befindet, die Geruchsentwicklung der Waschanlage vollständig oder annähernd vollständig unterbunden ist. Insbesondere hat sich herausgestellt, dass diese mit einem relativ geringen Aufwand zu realisierende Maßnahme sehr viel wirkungsvoller ist als die bisher eingesetzten Maßnahmen, die einen wesentlich größeren energetischen und technischen Aufwand erfordern. Es ist möglich, die erfindungsgemäße Lösung alleine oder aber in Verbindung mit einigen oder allen der bisher bekannten Lösungseinsätze einzusetzen. Es ist möglich, existierende Fahrzeugwaschanlagen entsprechend nach- oder umzurüsten.

Gemäß der vorliegenden Erfindung wird die stehende Filtereinrichtung bzw. das in der Filtereinrichtung stehende Waschwasser belüftet. Normalerweise bilden sich vor allem in den Stillstandszeiten, d.h. in den Phasen, in denen die insbesondere im Sammelbecken oder Stapelbecken angeordnete Tauchpumpe nicht arbeitet, durch den Luftabschluss anaerobe, geruchsproduzierende Prozesse. Dies gilt insbesondere für die Nacht und das Wochenende. Durch die erfindungsgemäße direkte Belüftung der Filtereinrichtung und damit des Filtermaterials wird die Entstehung dieser Prozesse verhindert oder zumindest in erheblichem Maß reduziert. In praktischen Installationen der erfindungsgemäßen Fahrzeugwaschanlage hat sich gezeigt, dass am Morgen und nach dem Wochenende die Geruchsbelästigung beseitigt oder zumindest so weit reduziert wird, dass diese nicht als störend empfunden wird.

Erfindungsgemäß wird nicht das Leitungssystem zwischen den verschiedenen Aggregaten, sondern die Filtereinrichtung direkt mit Luft und damit mit Sauerstoff beschickt.

Durch die direkte Belüftung der Filtereinrichtung wird zudem die Filterwirkung direkt verbessert. Durch eine Luftzufuhr mit einem hohem Volumenstrom, der insbesondere in einem Bereich von 28 - 80 l/min liegen kann, in das Filtermaterial wird dieses leicht durchmischt, die Kanalbildung im Filtermaterial wird deutlich reduziert und somit werden die Standzeiten der Filterfüllung deutlich verlängert. Außerdem können dadurch die Schmutzstoffe wesentlich besser gefiltert und die Rückspülintervalle deutlich länger gewählt werden. In einer praktischen Installation der erfindungsgemäßen Fahrzeugwaschanlage hat sich gezeigt, dass vorher alle 200 Wäschen rückgespült werden musste, und danach erst bei über 400 Wäschen. Insgesamt ergeben sich durch die erfindungsgemäße Fahrzeugwaschanlage ein verringerter Aufwand und eine Kostenersparnis.

Gemäß einer der Erfindung zugrundeliegenden Erkenntnis wurde als Hauptursache für die üblen Gerüche bei Fahrzeugwaschanlage die Filtereinrichtung selbst erkannt, in der während der Stillstandszeiten durch den Luftabschluss anaerobe Verhältnisse entstehen. Die herkömmlichen Fahrzeugwaschanlagen konnten die Geruchsproblematik zum Teil nur mit massivem Einsatz von Desinfektionsmitteln, besispielsweise mit Chlorbleichlauge in den Griff bekommen. Bei der erfindungsgemäßen Fahrzeugwaschanlage kann dagegen vollständig auf den Einsatz von Desinfektionsmitteln verzichtet werden, wodurch ein signifikanter Beitrag zur Reduzierung von Abwasserbelastung, beispielsweise durch AOX, und zum Umweltschutz geleistet wird. Die große Oberfläche des Filtermaterials dient dabei den aeroben Bakterien als Siedlungsunterlage und trägt zudem zum verbesserten biologischen Abbau von Schmutzstoffen und Tensiden bei, der CSB sinkt in einem signifikanten, messbaren Maß.

Die Filtereinrichtung kann ein Kiesbett- oder Sandbettfilter sein. Andere Filter, wie beispielsweise Plattenfilter, können auch mit der erfindungsgemäßen Belüftungseinrichtung versehen sein. Typischerweise werden Sandbettfilter mit einem Quarzsand mit einer Körnung von zwischen 0,8 bis 1,2 mm verwendet und insbesondere werden geschlossene Sandbettfilter verwendet, bei denen einsatzgemäß der Filter abgeschlossen ist und die Strömung des Waschwassers von oben nach unten durch das Sandbett erfolgt. Insbesondere ist im unteren Bereich des Filters ein Ablauf vorgesehen. Das Sandbett kann von unten von einem sogenannten Filterstern getragen sein, bei dem es sich typischerweise um ein Sieb bzw. ein Spaltfilter mit einer Maschenweite von 0,5 mm handelt. Das Waschwasser wird typischerweise unter Druck durch den Filter gepresst, wobei der Filterbehälter üblicherweise bis oben hin mit Wasser gefüllt ist.

Im Bereich des Ablaufs bzw. im Bereich einer Ablaufleitung des Filters kann die Belüftungseinrichtung angeschlossen sein. Bei einem Sandbett- bzw. Kiesbettfilter wie vorangehend beschrieben, kann der Filterstern beim Einblasen der Luft eine Verteilung der Luft auf das komplette Filterbett bewerkstelligen.

Die Fahrzeugwaschanlage kann eine Pumpe aufweisen, die einsatzmäßig abhängig vom Waschwasserbedarf Waschwasser durch die Filtereinrichtung und in den Vorlagebhälter pumpt, wobei Pumpphasen und Pumppausen einander abwechseln. Typischerweise wird dann Waschwasser durch den Filter gepumpt, wenn in dem Vorlagebehälter der Wasserstand abgefallen ist, und dieser nachgefüllt werden muss. Es kann eine Steuerung vorgesehen sein, die mit entsprechenden Sensoren verbunden ist, um diese Steuerung bzw. Regelung zu bewerkstelligen. Zusätzlich zu den Pumpphasen und Pumppausen können Rückspülphasen vorgesehen sein, während denen Waschwasser in entgegengesetzter Richtung und bei erhöhtem Druck durch den Filter gepresst wird und in den Waschwasserabfluß der Waschanlage und von dort zurück über die Schlammfangbecken geführt wird, um Schlamm, der sich in dem Filter ansammelt, abzureinigen. Als Pumppausen im Sinne der vorliegenden Anmeldung werden diejenigen Zeiträume verstanden, in denen Waschwasser weder in der Normalströmungsrichtung noch in Rückspülungsrichtung durch den Filter gepumpt wird.

Die Belüftungseinrichtung kann derart ausgebildet sein, dass sie Luft während Pumppausen in die Filtereinrichtung einbläst. Das ist günstig, weil während der Pumppausen der Druck in dem Filter reduziert ist. Außerdem kann das Einblasen der Luft während der Pumppausen den Betrieb des Filters nicht stören.

Die Belüftungseinrichtung kann derart ausgelegt sein, dass sie einsatzmäßig einen Luftüberdruck erzeugt, der geringer ist als der von der Pumpe erzeugte Waschwasserüberdruck in der Filtereinrichtung, bzw. Der geringer ist als der in der Filtereinrichtung vorhandene Waschwasserdruck. Das ermöglicht, dass Luft gegen den Wasserdruck in die Filtereinrichtung gepumpt werden kann.

Die Belüftungseinrichtung kann über ein Rückschlagventil, welches beispielsweise in einer Zuluftleitung, die an der Filtereinrichtung angeschlossen ist, angeordnet ist, mit der Filtereinrichtung verbunden sein, wobei die Durchströmungsrichtung des Rückschlagventils so ausgerichtet ist, dass bei einem Wasserpumpdruck in der Ablaufleitung das Rückschlagventil schließt und keine Luft mehr in die Filtereinrichtung eingeblasen werden kann.

Im oberen Bereich, vorzugsweise am höchsten Punkt der Filtereinrichtung kann ein Luftablassventil vorgesehen sein, welches derart ausgebildet ist, dass es Luft aus der Filtereinrichtung entweichen lässt, und dabei ein Austreten von Wasser verhindert. Filtereinrichtungen des Stands der Technik besitzen bereits an ihrem oberen Ende eine Luftablassschraube, durch die bei dem üblichen Betrieb z.B. einmal täglich Luft aus der Filtereinrichtung abgelassen wird. Es ist möglich, die überschüssige, von unten in die Filtereinrichtung eingeblasene Luft durch diesen Luftablass abzulassen. Es kann günstig sein, einen Schlauch an diesen Luftablass anzuschließen, um während Pumpphasen Auslaufen des Wassers beispielsweise in den Waschwasserabfluß der Waschanlage einzuleiten. Bei einer Ausführungsform mit einem Luftablassventil kann das Luftablassventil beispielsweise ein steuerbares Ventil sein, welches ansprechend auf ein Signal der Steuerung, das beispielsweise gleichzeitig oder kurz nach dem Anlaufen der Pumpe generiert wird, das Luftablassventil schließt, bzw. dieses öffnet, sobald die Pumpphase beendet ist. Alternativ ist es möglich, ein Ventil mit einem in einem Käfig gehaltenen Schwimmkörper zu verwenden, der in dem Käfig durch die Schwerkraft normalerweise von dem Ventilsitz entfernt gehalten ist, so dass Luft ausströmen kann, aber mit steigendem Wasserstand nach oben gegen den Ventilsitz gepresst wird, so dass kein Wasser oder praktisch kein Wasser austreten kann.

Die Erfindung betrifft ferner ein Verfahren gemäss Anspruch 6 zur Wiederaufbereitung von Waschwasser einer Fahrzeugwaschanlage gemäss Anspruch 1, die in Strömungsrichtung ein Sammelbecken, eine Filtereinrichtung und einen Vorlagebehälter, in dem wieder aufbereitetes Wasser zur Fahrzeugwäsche bereitgehalten wird, aufweist, und aufweisend den Schritt des Einblasens von Luft während Pumppausen von unten in die Filtereinrichtung, so dass sich in dem in der Filtereinrichtung stehenden Waschwasser eine erhöhte Sauerstoffkonzentration einstellt.

Die Luft wird durch eine an die Filtereinrichtung angeschlossene Ablaufleitung eingeblasen . Die Luft wird vom Boden der Filtereinrichtung her eingeblasen. Es ist günstig, die Luft beim Einblasen möglichst gleichmäßig über das Filterbett zu verteilen, so dass auch die Luft das Filterbett möglichst gleichmäßig durchströmt.

In einer vorteilhaften Weiterbildung umfasst das erfindungsgemäße Verfahren ferner den Schritt des bedarfsabhängigen Pumpens von Waschwasser durch die Filtereinrichtung, wobei Pumpphasen und Pumppausen einander abwechseln, und wobei das Einblasen von Luft während Pumppausen erfolgt.

Sofern Waschwasser bedarfsabhängig durch die Filtereinrichtung gepumpt wird, kann es bevorzugt sein, Luft während Pumppausen einzublasen. Das Einblasen der Luft in die Filtereinrichtung kann dabei kontinuierlich oder mit Unterbrechung oder iterativ erfolgen. Eine besonders einfache Lösung ist es, das Gebläse im wesentlichen kontinuierlich durchlaufen zu lassen.

In einer vorteilhaften Weiterbildung des erfindungsgemäßen Verfahrens erfolgt das Einblasen der Luft in die Filtereinrichtung mit einem geringeren Überdruck als dem von der Pumpe in der Filtereinrichtung erzeugte Waschwasserüberdruck.

In einer vorteilhaften Weiterbildung des erfindungsgemäßen Verfahrens ist ferner der Schritt des Ablassens von Luft aus der Filtereinrichtung vorgesehen.

Es kann günstig sein, das Einblasen zeitabhängig zu regeln, beispielsweise eine Zeitschaltuhr vorzusehen bzw. eine Steuerung vorzusehen, welche die Belüftungseinrichtung zu ganz bestimmten Zeiten einschaltet, beispielsweise einige Stunden vor dem typischen morgendlichen Betriebsbeginn oder wenn die Anlage länger als eine bestimmte Zeit, beispielsweise länger als 6 Stunden abgeschaltet war. Es sind verschiedene Regelungen möglich, um einerseits Energie zu sparen und andererseits Geruchsbelästigungen soweit als möglich zu vermeiden. Die Steuerung kann ferner an einen Temperatursensor, beispielsweise der Umgebungstemperatur oder der Temperatur in der Filtereinrichtung angeschlossen sein, so dass Betrieb und/oder Betriebsdauer der Belüftungseinrichtung alternativ oder zusätzlich temperaturabhängig gesteuert werden können. In ähnlicher Weise kann die Steuerung die Sauerstoffkonzentration in dem Waschwasser berücksichtigen, so dass die Belüftungseinrichtung Luft nach dem tatsächlichen Bedarf einblasen kann. So kann man Luft in einer solchen Menge in die Filtereinrichtung einbringen, dass die Konzentration gelösten Sauerstoffs im Waschwasser mindestens 1,5 mg/l oder mehr, beispielsweise mindestens etwa 2 mg/l oder beispielsweise etwa 4 mg/l in der Filtereinrichtung bzw. im Ablauf des Wassers aus der Filtereinrichtung beträgt.

Vorzugsweise wird Luft in einer Menge von zwischen etwa 10l pro Minute pro m³und etwa 100l pro Minute pro m³ bevorzugte zwischen etwa 15l pro Minute pro m³ und etwa 60l pro Minute pro m³ in die Filtereinrichtung eingebracht.

Vorzugsweise wird Luft mit einem Überdruck von etwa 50 mbar bis etwa 1bar, bevorzugt zwischen etwa 75mbar bis etwa 200mbar bevorzugt zwischen etwa 75 mbar bis etwa 150 mbar in die Filtereinrichtung eingebracht. Es gibt Ventilatoren, die bei relativ geringer Leistungsaufnahme in der Lage sind, solche relativ großen Luftmengen bei derartigen Überdrücken zu liefern.

Die mit Bezug auf die erfindungsgemäße Fahrzeugwaschanlage angegebenen vorteilhaften Weiterbildungen und die sich dabei ergebenden Vorteile können auch, in Form von entsprechenden Verfahrensschritten, in dem Verfahren zur Wiederaufbereitung von Waschwasser einer Fahrzeugwaschanlage realisiert werden. Diese sind ausdrücklich als mit-offenbart anzusehen.

Die Erfindung betrifft ferner ein Verfahren zum Nachrüsten einer Fahrzeugwaschanlage mit einer Belüftungseinrichtung gemäß der vorliegenden Erfindung.

Die Erfindung und Ausgestaltung der Erfindung werden nachfolgend anhand eines zeichnerisch dargestellten Ausführungsbeispiels erläutert. Es zeigen:
- Fig. 1: eine schematische Darstellung einer Fahrzeugwaschanlage ; und
- Fig. 2: einen Detailausschnitt aus der Fahrzeugwaschanlage gemäss Anspruch 1.

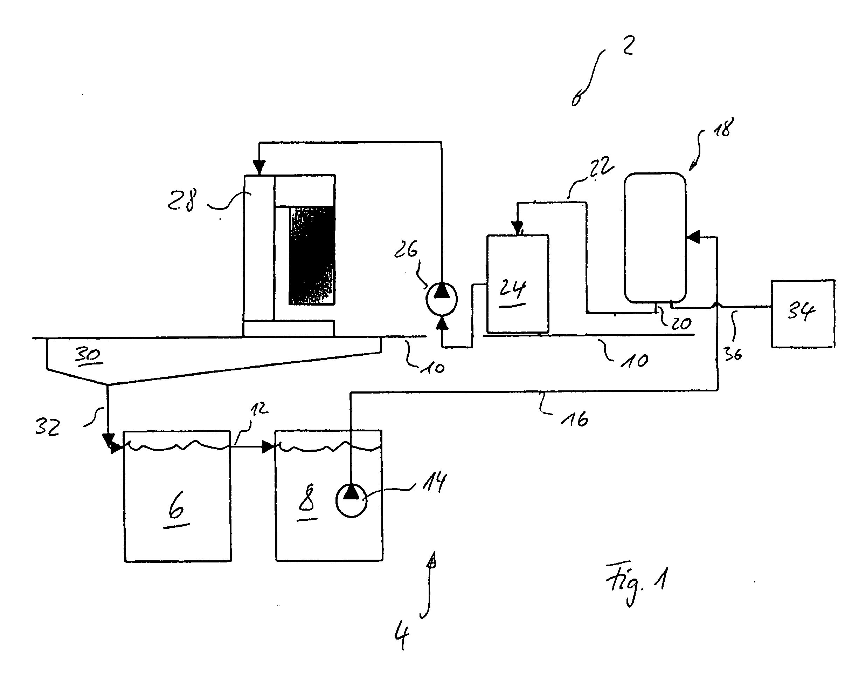

Fig. 1 zeigt eine Fahrzeugwaschanlage 2 und insbesondere eine Portalanlage aufweisend einen Waschwasser-Wiederaufbereitungs-Kreislauf 4 mit, in Strömungsrichtung, einem Sammelbecken 6, 8, wobei das erste Sammelbecken 6 auch als Schlammfangbecken und das zweite Sammelbecken 8 auch als Stapelbecken bezeichnet wird. Schematisch ist mit 10 die Erdoberfläche dargestellt, man erkennt, dass die beiden Sammelbecken 6, 8 unterirdisch angeordnet sind. Man erkennt ferner einen Überlauf 12 an dem Sammelbecken 6, über den überschüssiges Wasser aus dem Schlammfangbecken 6 in das Stapelbecken 8 fließen kann. In dem Sammelbecken 8 ist eine Pumpe 14 typischerweise eine Tauchpumpe 14 angeordnet. Die Pumpe 14 kann typischerweise einen Überdruck von ca. 1,5 bis 2,5 bar liefern und mit diesem Überdruck Waschwasser aus dem Stapelbecken 8 über eine Leitung 16 in eine Filtereinrichtung 18 liefern. Die Pumpe 14 drückt dabei das Wasser durch die Filtereinrichtung 18, durch einen Ablauf 20 und einen Ablaufleitung 22 in einen Vorlagebehälter 24. Aus dem Vorlagebehälter 24 wird bedarfsmäßig Wasser von einer Hochdruckpumpe 26 dem Waschportal 28 zugeführt. In einem Waschwasserabfluß 30 wird das Wasser schließlich gesammelt und über die Abflußleitung 32 wieder an die Sammelbecken 6, 8 zurückgeleitet.

Eine Belüftungseinrichtung 34 ist zum direkten Einblasen von Luft in die Filtereinrichtung 18 angeschlossen nicht erfindungsgemässe Ausgestaltung.

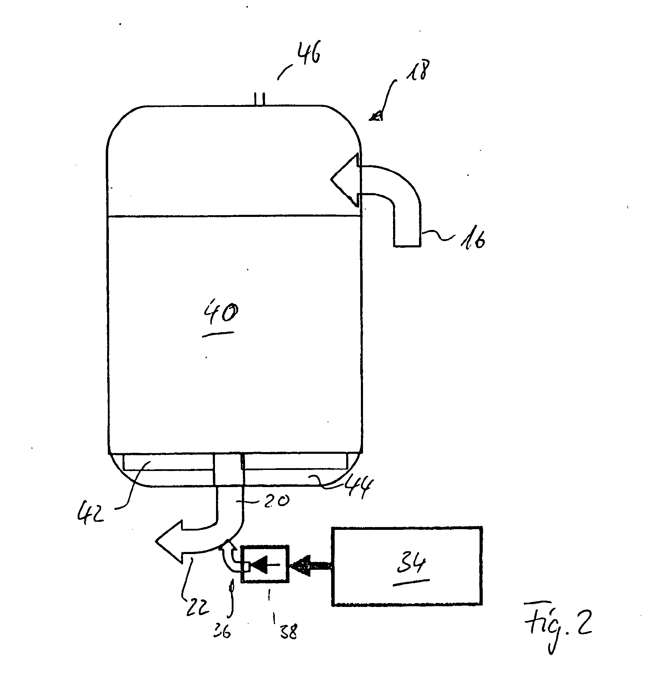

Die Filtereinrichtung 18 ist in Fig. 2 erfindungsgemäss im Detail gezeigt. Man erkennt die Zuleitung 16, die Ablaufleitung 22 und eine Zuluftleitung 36 in der ein Rückschlagventil 38 angeordnet ist. Die Darstellung ist schematisch, die Zuflüsse und Abflüsse sind jeweils an den Leitungen 16, 23, 36 mit einem angedeuteten Pfeil dargestellt.

Die in der Fig. 2 gezeigte Filtereinrichtung 18 ist ein Sandbettfilter, bei dem ein Sandbett 40 auf einem Filterstern 42 angeordnet ist. Das Filtermaterial kann beispielsweise Quarzsand mit einer Körnung von 0,8 - 1,2mm sein.

Das Waschwasser wird durch die Pumpe 14 während Pumpphasen durch das Sandbett 40 und durch den Filterstern 42 gepresst. Der von der Pumpe 14 bei Betrieb erzeugte Waschwasserüberdruck in der Filtereinrichtung 18 ist größer als der von der Belüftungseinrichtung 34 bei Betrieb gelieferte Luftüberdruck in der Zuluftleitung 36, so dass das Rückschlagventil 38 geschlossen ist und keine Luft von der Belüftungseinrichtung 34 über die Ablaufleitung 22 bzw. den Ablauf 20 zurück in die Filtereinrichtung 18 geblasen werden kann.

Erst bei einer Pumppause wird der Luftüberdruck größer als der Wasserdruck in der Ablaufleitung 22 bzw. dem Ablauf 20, woraufhin das Rückschlagventil 38 öffnet und Luft von unten über den Ablauf 20 in die Filtereinrichtung 18 eingeblasen wird. Dabei verteilt sich die Luft erst in einem freien Raum 44 unter dem Filterstern 42 und wird dann relativ gleichmäßig durch den Filterstern 42 nach oben durch das Sandbett 40 verteilt. Auf diese Weise stellt sich in dem in der Filtereinrichtung stehenden Wasser eine relativ hohe Sauerstoffkonzentration ein, was einen aeroben Abbauprozess in der Filtereinrichtung 18 begünstigt. Die Luft kann, ohne über einen freien Raum geleitet zu werden, direkt durch den Filterstern verteilt werden.

Bei der gezeigten Ausführungsform kann Luft aus der Belüftungseinrichtung 34 nicht nur nach oben in die Filtereinrichtung 18 strömen sondern auch über die Ablaufleitung 22 in den Vorlagebehälter 24. Es kann deshalb günstig sein, auch in der Ablaufleitung 22 ein Sperrventil derart vorzusehen, dass Luft der Belüftungseinrichtung 34 nur in die Filtereinrichtung 18, nicht aber in den Vorlagebehälter 24 gepumpt wird. Bei diesem Sperrventil kann es sich beispielsweise um ein elektronisch gesteuertes Ventil handeln, welches ansprechend auf Signale, welche den Betrieb der Pumpe 14 anzeigen, öffnet, so dass Waschwasser durch das Sperrventil aus der Filtereinrichtung 18 in den Vorlagebehälter 24 gepumpt werden kann.

Über die Belüftungseinrichtung 34 in die Filtereinrichtung 18 strömende Luft durchströmt das Sandbett 14 und sammelt sich in dem freien Volumen über dem Sandbett 40. Sie kann durch einen Luftablass 46, der beispielsweise in der Art eines Luftablassventils ausgebildet sein kann, aus der Filtereinrichtung gelassen werden. Es ist auch möglich, eine relativ kleine Luftablassöffnung vorzusehen, durch die beim Anliegen eines Wasserdrucks infolge des hohen Strömungswiderstands für das Wasser durch die Luftablassöffnung keine nennenswerte Menge an Wasser ausströmt.

Für die Belüftungseinrichtung kann ein relativ konventioneller Ventilator bzw. Gebläse verwendet werden. So gibt es beispielsweise von der Firma MEDO Gebläse unter der Bezeichnung LA 28B, die man für Filtereinrichtungen 18 mit einem Volumen von weniger als 0,5 m³ einsetzen kann bzw. ein Gebläse mit der Bezeichnung LA 45B, welches man beispielsweise für Filtereinrichtungen 18 mit einem Volumen < als 3 m³ einsetzen kann.

Die Belüftungseinrichtung 34 kann beispielsweise mit der Steuerung der Fahrzeugwaschanlage 2 gekoppelt sein. Sie kann aber auch praktisch unabhängig davon arbeiten.

## Patentansprüche

1. Fahrzeugwaschanlage (2) aufweisend einen Waschwasser-Wiederaufbereitungs-Kreislauf (4) mit in Strömungsrichtung einem Sammelbecken (6, 8), einer Pumpe (14), einer Filtereinrichtung (18) und einem Vorlagebehälter (24), in dem wiederaufbereitetes Waschwasser zur Fahrzeugwäsche bereitgehalten wird,
wobei die Filtereinrichtung (18) derart ausgebildet ist, dass sie während Pumpphasen von oben nach unten von dem Waschwasser durchströmt wird, wobei die Filtereinrichtung (18) eine Ablaufleitung (22) aufweist,
**dadurch gekennzeichnet, dass** eine an die Ablaufleitung (22) der Filtereinrichtung (18) angeschlossene Belüftungseinrichtung (34) vorgesehen ist, die so ausgebildet ist, dass sie während Pumppausen Luft durch die Ablaufleitung (22) von unten in die Filtereinrichtung (18) einbläst, so dass sich in dem in der Filtereinrichtung (18) stehenden Waschwasser eine erhöhte Sauerstoffkonzentration einstellt.

2. Fahrzeugwaschanlage (2) nach Anspruch 1, wobei die Pumpe (14) sö ausgebildet ist, dass sie einsatzmäßig in Abhängigkeit vom Waschwasserbedarf Waschwasser durch die Filtereinrichtung (18) und in den Vorlagebehälter (24) pumpt, wobei Pumpphasen und Pumppausen einander abwechseln.

3. Fahrzeugwaschanlage (2) nach Anspruch 1, wobei die Belüftungseinrichtung (34) derart ausgelegt ist, dass sie einsatzmäßig einen Luftüberdruck erzeugt, der geringer ist als der von der Pumpe (14) erzeugte Waschwasserüberdruck in der Filtereinrichtung (18).

4. Fahrzeugwaschanlage (2) nach Anspruch 3, wobei die Belüftungseinrichtung (34) mit einer Zuluftleitung (36) an die Filtereinrichtung (18) angeschlossen ist und wobei ein Rückschlagventil (38) in der Zuluftleitung (36) vorgesehen ist, das derart angeordnet ist, dass bei einem Wasserpumpdruck in der Ablaufleitung (22) das Rückschlagventil (38) schließt und ein Einblasen von Luft in die Filtereinrichtung (18) unterbunden ist.

5. Fahrzeugwaschanlage (2) nach einem der Ansprüche 1 bis 4, ferner aufweisend ein am obersten Ende der Filtereinrichtung (18) angeschlossenes Luftablassventil, welches derart ausgebildet ist, dass es Luft aus der Filtereinrichtung (18) entweichen lässt, aber Austreten von Wasser unterbindet.

6. Verfahren zur Wiederaufbereitung von Waschwasser einer Fahrzeugwaschanlage (2), die in Strömungsrichtung ein Sammelbecken (6, 8), eine Pumpe (14), eine Filtereinrichtung (18) mit einer Ablaufleitung (22) und einen Vorlagebehälter (24), in dem wiederaufbereitetes Wasser zur Fahrzeugwäsche bereitgehalten wird, aufweist, **gekennzeichnet durch** den Schritt des Einblasens von Luft während Pumppausen **durch** die Ablaufleitung (22) von unten in die Filtereinrichtung (18), so dass sich in dem in der Filtereinrichtung (18) stehenden Waschwasser eine erhöhte Sauerstoffkonzentration einstellt.

7. Verfahren nach Anspruch 6, wobei Luft in einer solchen Menge in die Filtereinrichtung (18) eingebracht wird, dass die Konzentration an gelöstem Sauerstoff im Waschwasser etwa 1,5 mg/l oder mehr beträgt.

8. Verfahren nach Anspruch 7 oder 8, wobei Luft in einer Menge von zwischen etwa 10 l/(min m³) und etwa 100 l/(min m³), bevorzugter zwischen etwa 15 l/ (min m³) und etwa 60 l/(min m³) in die Filtereinrichtung (18) eingebracht wird.

9. Verfahren nach einem der Ansprüche 6 bis 8, wobei Luft mit einem Überdruck von zwischen etwa 50 mbar bis etwa 1 bar, bevorzugter zwischen etwa 75 mbar bis etwa 500 mbar, bevorzugter zwischen etwa 75 mbar bis etwa 150 mbar in die Filtereinrichtung (18) eingebracht wird.

10. Verfahren zum Nachrüsten einer Fahrzeugwaschanlage (2) aufweisend einen Waschwasser-Wiederaufbereitungs-Kreislauf (4) mit - in Strömungsrichtung - einem Sammelbecken (6, 8), einer Pumpe (14), einer Filtereinrichtung (18) mit einer Ablaufleitung (22) und einem Vorlagebehälter (24), in dem wiederaufbereitetes Waschwasser zur Fahrzeugwäsche bereitgehalten wird, aufweisend das Anschließen einer Belüftungseinrichtung (34) an die Ablaufleitung (22) der Filtereinrichtung derart, dass die Belüftungseinrichtung (34) für das Einblasen von Luft während Pumppausen durch die Ablaufleitung (22) von unten in die Filtereinrichtung (18) ausgebildet ist.

## Claims

1. A vehicle washing facility (2) comprising a wash water reprocessing circuit (4) having, in the direction of flow, a collecting basin (6, 8), a pump (14), a filter means (18) and a storage tank (24) storing reprocessed wash water for washing vehicles,
wherein the filter means (18) is designed such that, during pumping phases, the wash water flows through the same from top to bottom, the filter means (18) further having a discharge line (22),
**characterized in that** an aeration means (34) connected to the discharge line (22) of the filter means (18) is provided that is designed such that, during pumping breaks, it blows air through the discharge line (22) from below into the filter means (18) so that an increased oxygen concentration arises in the wash water standing in the filter means (18).

2. The vehicle washing facility (2) according to claim 1,
wherein the pump (14) is designed such that in use, in accordance with the wash water required, it pumps wash water through the filter means (18) and into the storage tank (24), with pumping phases and pumping breaks alternating.

3. The vehicle washing facility (2) according to claim 1,
wherein the aeration means (34) is designed such that in use it generates an air overpressure which is less than the wash water overpressure in the filter means (18) generated by the pump (14).

4. The vehicle washing facility (2) according to claim 3,
wherein the aeration means (34) is connected by an air supply line (36) to the filter means (18) and wherein a check valve (38) in the air supply line (36) is provided which is arranged such that, with a water pumping pressure in the discharge line (22), the check valve (38) closes and blowing of air into the filter means (18) is prevented.

5. The vehicle washing facility (2) according to any one of claims 1 to 4, further comprising an air discharge valve connected to the uppermost end of the filter means (18), which is designed such that it allows air to escape from the filter means (18) but inhibits the leakage of water.

6. A method of reprocessing wash water of a vehicle washing facility (2) which, in the direction of flow, comprises a collecting basin (6, 8), a pump (14), a filter means (18) having a discharge line (22), and a storage tank (24) storing reprocessed water for washing vehicles,
**characterized by** the step of blowing air during pump breaks through the discharge line (22) from below into the filter means (18) so that an increased oxygen concentration arises in the wash water standing in the filter means (18).

7. The method according to claim 6,
wherein air is introduced into the filter means (18) in such an amount that the concentration of dissolved oxygen in the wash water is about 1.5 mg/l or more.

8. The method according to claim 7 or 8,
wherein air is introduced into the filter means (18) in an amount of between about 10 l/(min m³) and about 100 l/(min m³), more preferably between about 15 l/ (min m³) and about 60 l/(min m³).

9. The method according to any one of claims 6 to 8,
wherein air is introduced into the filter means (18) with an excess pressure of from about 50 mbar to about 1 bar, more preferably from about 75 mbar to about 500 mbar, more preferably from about 75 mbar to about 150 mbar.

10. A method for retrofitting a vehicle washing facility (2) comprising a wash water reprocessing circuit (4) having - in the direction of flow - a collecting basin (6, 8), a pump (14), a filter means (18) having a discharge line (22), and a storage tank (24) storing reprocessed wash water for washing vehicles, comprising the step of connecting an aeration means (34) to the discharge line (22) of the filter means such that the aeration means (34) is designed for blowing-in air during pumping breaks through the discharge line (22) from below into the filter means (18).

## Revendications

1. Installation de lavage de véhicules (2) comportant un circuit de retraitement d'eau de lavage (4) comprenant, dans le sens du courant, un bac collecteur (6, 8), une pompe (14), un dispositif de filtrage (18) et un récipient de stockage (24) dans lequel de l'eau de lavage retraitée est gardée à disposition pour le lavage de véhicules,
le dispositif de filtrage (18) étant réalisé de telle manière qu'il est, durant des phases de pompage, traversé de haut en bas par l'eau de lavage, le dispositif de filtrage (18) comportant une conduite d'évacuation (22), **caractérisée en ce qu'**un dispositif de ventilation (34) raccordé à la conduite d'évacuation (22) du dispositif de filtrage (18) est prévu, lequel est réalisé de telle façon que, durant des pauses de pompage, il insuffle de l'air à travers la conduite d'évacuation (22) à partir d'en bas dans le dispositif de filtrage (18), de telle sorte que, dans l'eau de lavage se trouvant dans le dispositif de filtrage (18), une concentration accrue en oxygène est obtenue.

2. Installation de lavage de véhicules (2) selon la revendication 1, la pompe (14) étant réalisée de telle façon qu'elle pompe au gré des sollicitations, en fonction du besoin en eau de lavage, de l'eau de lavage à travers le dispositif de filtrage (18) et dans le récipient de stockage (24), les phases de pompage et les pauses de pompage s'alternant.

3. Installation de lavage de véhicules (2) selon la revendication 1, le dispositif de ventilation (34) étant conçu de telle manière qu'il génère au gré des sollicitations une surpression d'air inférieure à la surpression d'eau générée par la pompe (14) dans le dispositif de filtrage (18).

4. Installation de lavage de véhicules (2) selon la revendication 3, le dispositif de ventilation (34) étant raccordé par une conduite d'amenée d'air (36) au dispositif de filtrage (18)
et une soupape antiretour (38) étant prévue dans la conduite d'amenée d'air (36), laquelle est agencée de telle façon que, quand il y a une pression de pompage d'eau dans la conduite d'évacuation (22), la soupape antiretour (38) ferme et un insufflage d'air dans le dispositif de filtrage (18) est empêché.

5. Installation de lavage de véhicules (2) selon une des revendications de 1 à 4, comportant en outre une soupape de délivrance d'air qui est raccordée à l'extrémité supérieure du dispositif de filtrage (18) et qui est réalisée de telle façon qu'elle laisse s'échapper de l'air du dispositif de filtrage (18) mais empêche une fuite d'eau.

6. Procédé de retraitement d'eau de lavage d'une installation de lavage de véhicules (2), qui comporte, dans le sens du courant, un bac collecteur (6, 8), une pompe (14), un dispositif de filtrage (18) doté d'une conduite d'évacuation (22) et un récipient de stockage (24) dans lequel de l'eau retraitée est gardée à disposition pour le lavage de véhicules, **caractérisé par** l'étape de l'insufflage d'air, durant des pauses de pompage, à travers la conduite d'évacuation (22) à partir d'en bas dans le dispositif de filtrage (18), de telle sorte que, dans l'eau de lavage se trouvant dans le dispositif de filtrage (18), une concentration accrue en oxygène est obtenue.

7. Procédé selon la revendication 6, de l'air étant introduit en une telle quantité dans le dispositif de filtrage (18) que la concentration en oxygène dissous dans l'eau de lavage est d'environ 1,5 mg/l ou davantage.

8. Procédé selon la revendication 7 ou 8, de l'air étant introduit en une quantité se situant entre environ 10 l/(min m³) et environ 100 l/(min m³), de préférence entre environ 15 l/(min m³) et environ 60 l/(min m³) dans le dispositif de filtrage (18).

9. Procédé selon une des revendications de 6 à 8, de l'air étant introduit avec une surpression située entre environ 50 mbar et environ 1 bar, de préférence entre environ 75 mbar et environ 500 mbar, davantage de préférence entre environ 75 mbar et environ 150 mbar dans le dispositif de filtrage (18).

10. Procédé de rééquipement d'une installation de lavage de véhicules (2) comportant un circuit de retraitement d'eau de lavage (4) comprenant - dans le sens du courant - un bac collecteur (6, 8), une pompe (14), un dispositif de filtrage (18) doté d'une conduite d'évacuation (22) et un récipient de stockage (24) dans lequel de l'eau de lavage retraitée est gardée à disposition pour le lavage de véhicules,
comportant le raccordement d'un dispositif de ventilation (34) à la conduite d'évacuation (22) du dispositif de filtrage de telle sorte que le dispositif de ventilation (34) est conçu pour l'insufflage d'air, durant des pauses de pompage, à travers la conduite d'évacuation (22) à partir d'en bas dans le dispositif de filtrage (18).
